# FASCICULE DE BREVET EUROPEEN

(11) **EP 1 151 880 B1**
(45) Date de publication et mention de la délivrance du brevet: **20.09.2006**
(21) Numéro de dépôt: 01401132.4
(22) Date de dépôt: 02.05.2001
(51) Int. Cl.: B60J 5/04, E05D 15/52

(54) **Porte transformable de véhicule automobile**
Umstellbare Tür für Motorfahrzeug
Convertible door for motor vehicle

(30) Priorité: 04.05.2000 FR 0005728
(43) Date de publication de la demande: 07.11.2001
(73) Titulaire: Peugeot Citroen Automobiles SA, 92200 Neuilly sur Seine (FR)
(72) Inventeur: Bertrand Belanger, Pascal, 92310 Sevres (FR)
(74) Mandataire: Blot, Philippe Robert Emile

(56) Documents cités:
- DE-A- 19 507 427
- FR-A- 2 728 931
- FR-A- 2 741 105

## Description

La présente invention concerne une porte d'un véhicule automobile qui peut être utilisé comme véhicule de loisirs à carrosserie ouverte.

On connaît des véhicules décapotables, qui se distinguent des véhicules classiques en ce que leur toit est escamotable de façon que la partie supérieure du véhicule soit découverte.

D'autres véhicules de loisirs présentent des configurations plus dépouillées encore dans lesquelles les portes sont supprimées. De telles configurations ne sont pas compatibles avec un niveau de sécurité acceptable pour des véhicules d'usage courant.

Un but principal de l'invention est de permettre la réalisation d'un véhicule qui présente une configuration classique, dans laquelle l'habitacle est entièrement couvert, et une configuration dite de loisirs, dans laquelle l'habitacle peut être découvert latéralement, en conservant au véhicule un haut niveau de sécurité en cas, par exemple, de choc latéral ou d'éjection.

A cet effet, l'invention propose une porte transformable d'un véhicule automobile qui peut être utilisé comme véhicule de loisirs à carrosserie ouverte, comprenant une partie inférieure présentant la forme d'un panneau, caractérisée en ce qu'elle comporte une barre s'étendant dans une direction sensiblement longitudinale articulée sur une partie de caisse du véhicule par l'intermédiaire d'un dispositif d'articulation, la partie inférieure de la porte pouvant être fixée de façon amovible à la barre par l'intermédiaire de moyens de fixation libérables.

Suivant d'autres caractéristiques :
- le dispositif d'articulation comporte une partie de charnière fixe solidaire de la partie de caisse du véhicule et une partie de charnière mobile solidaire de la barre de porte, susceptible de pivoter par rapport à la partie de charnière fixe autour d'un axe qui peut être sélectionné, par l'intermédiaire d'un organe de sélection, entre un premier et un deuxième axes sensiblement orthogonaux ;
- le premier axe est sensiblement vertical et le deuxième axe est sensiblement horizontal et de direction transversale par rapport à l'axe longitudinal du véhicule ;
- la barre est reliée à la partie de caisse par des moyens de compensation d'effort adaptés pour favoriser le pivotement de la barre autour du deuxième axe à l'encontre de son poids ;
- les parties de charnière fixe et mobile présentent chacune une première glissière et une deuxième glissière d'axes sensiblement orthogonaux, les premières et respectivement les deuxièmes glissières étant susceptibles de s'emboîter de façon à présenter un axe commun, et
- la partie de charnière mobile comporte au moins un premier tourillon monté coulissant dans la première glissière de la partie de charnière mobile et au moins un deuxième tourillon monté coulissant dans la deuxième glissière de la partie de charnière mobile, lesdits tourillons étant déplaçables par l'organe de sélection entre une première position dans laquelle le premier tourillon est engagé à la fois dans la première glissière de la partie de charnière mobile et la première glissière de la partie de charnière fixe, alors que le deuxième tourillon est dégagé de la deuxième glissière de la partie de charnière fixe, et une deuxième position dans laquelle le deuxième tourillon est engagé à la fois dans la deuxième glissière de la partie de charnière mobile et la deuxième glissière de la partie de charnière fixe, alors que le premier tourillon est dégagé de la première glissière de la partie de charnière fixe, de façon que la barre de porte soit susceptible de pivoter par rapport à la partie de caisse, respectivement autour du premier ou du deuxième axe ;
- l'organe de sélection est un organe monté rotatif autour d'un axe de rotation, sur une platine solidaire de la partie de charnière mobile, et lié aux premier et deuxième tourillons de façon qu'une rotation dudit organe de sélection engendre un double coulissement d'une part, du premier tourillon par rapport aux premières glissières, et d'autre part, du deuxième tourillon par rapport aux deuxièmes glissières ;
- l'organe de sélection est susceptible de prendre deux positions angulaires par rapport à la platine correspondant respectivement aux deux positions relatives des tourillons et des glissières ;
- le panneau de porte comporte un organe de blocage en saillie adapté pour coopérer avec l'organe de sélection, lorsque le panneau est fixé à la barre, et la maintenir dans sa position dans laquelle la porte est susceptible de pivoter autour du premier axe ;
- l'organe de sélection comporte un organe de rappel élastique qui tend à rappeler ledit organe de sélection vers sa position dans laquelle la porte est susceptible de pivoter autour du deuxième axe lorsque le panneau est désolidarisé de la barre ;
- les premier et deuxième tourillons comportent chacun au moins un pion, et l'organe de sélection présente au moins deux doigts radiaux décalés angulairement par rapport à l'axe de rotation, comportant chacun au moins une lumière radiale recevant chacune à coulissement l'un desdits pions ;
- l'organe de sélection présente un doigt de manoeuvre sensiblement radial par rapport à l'axe de rotation, accessible à un utilisateur placé à l'intérieur du véhicule afin qu'il puisse manoeuvrer à rotation l'organe de sélection.

L'invention sera mieux comprise à la lecture de la description qui va suivre, donnée uniquement à titre d'exemple et faite en se référant aux dessins annexés, sur lesquels :
- la Fig.1 est une vue d'ensemble en perspective d'un véhicule comportant une porte transformable suivant l'invention, en configuration couverte ;
- la Fig.2 est une vue de détail de côté intérieur d'une porte d'un véhicule suivant la Fig.1 ;
- la Fig.3 est une vue partielle en coupe dans un plan transversal d'une porte suivant la Fig. 1 ;
- la Fig.4 est une vue analogue à la Fig.1 du véhicule en configuration découverte ;
- la Fig.5 est une vue en perspective montrant une barre de porte suivant l'invention, son dispositif d'articulation sur une partie de caisse et la partie de caisse ;
- la Fig.6 est une vue en plan du dispositif d'articulation positionné par rapport au logement de la partie de charnière mobile dans la barre de porte ;
- la Fig.7 est une vue analogue du dispositif d'articulation seul, dans la première position des tourillons correspondant au pivotement de la barre autour de l'axe horizontal ; et
- la Fig.8 est une vue analogue dans la deuxième position des tourillons correspondant au pivotement de la porte autour de l'axe vertical.

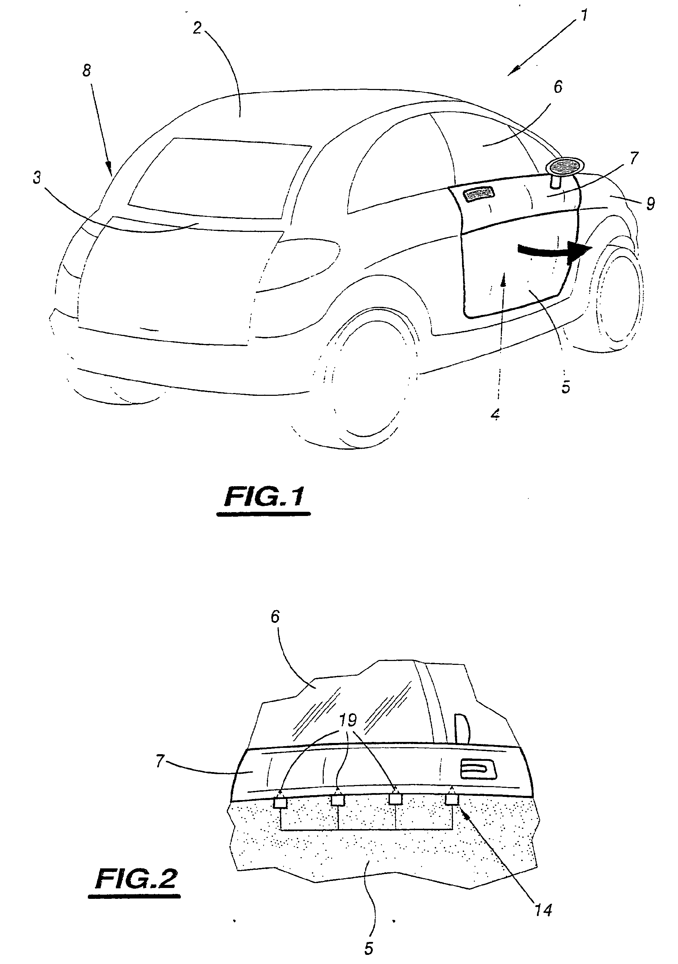

A la figure 1, on a représenté un véhicule automobile décapotable 1 présentant un toit 2 escamotable dans une partie arrière 3 du véhicule.

Le véhicule présente deux portes latérales formées chacune d'un panneau 5 constituant une partie inférieure de la porte 4, recevant une vitre 6 coulissante dans le panneau 5 entre une position complètement escamotée dans le panneau 5 et une position dans laquelle elle s'étend jusqu'à un bord du toit 2, et une barre 7 qui s'étend, lorsque la porte 4 est fermée, dans une direction sensiblement longitudinale suivant l'axe du véhicule 1.

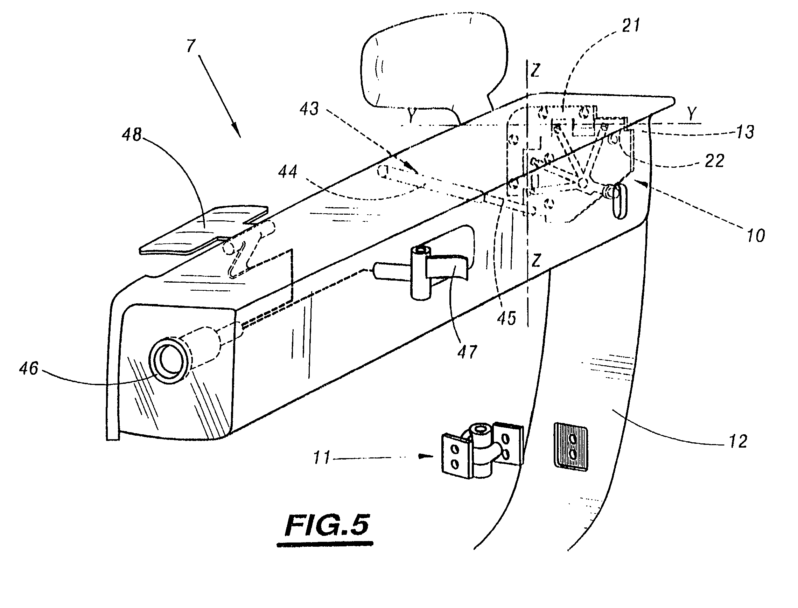

Comme représenté sur la figure 5, la porte est articulée sur la caisse au niveau d'un flanc avant, au moyen d'un dispositif d'articulation 10 et d'une charnière 11 liant mécaniquement une partie basse de caisse 12 et le panneau de porte 5. Le dispositif d'articulation 10 constitue une liaison mécanique entre la barre 7 et une partie de caisse 13 du véhicule 1.

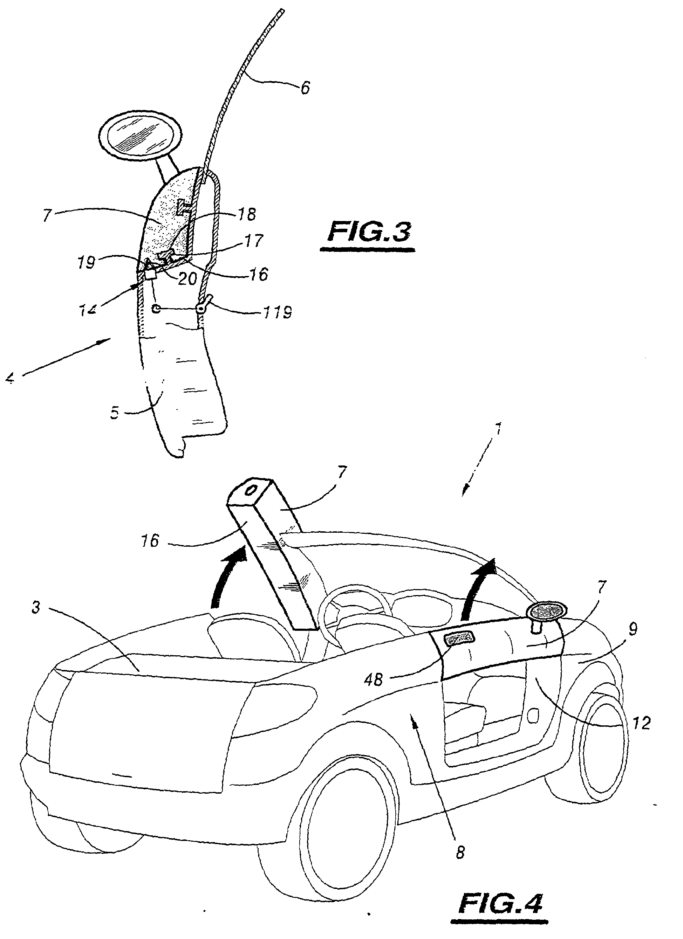

Comme cela sera mieux vu aux figures 2 et 3, le panneau 5 est fixé de façon amovible à la barre 7 par l'intermédiaire de moyens de fixation libérables 14.

Le panneau 5 présente dans son épaisseur un bord supérieur longitudinal 15 destiné à coopérer avec un bord longitudinal inférieur 16 de la barre 7 et sur lequel est formé un rail 17 en forme de T.

Le rail 17 est destiné à coopérer avec une glissière 18 formée dans la partie inférieure de la barre 7. Les moyens de fixation libérables 14 comportent des pions escamotables verticaux 19 montés sur le panneau de porte 5 de façon à dépasser du bord supérieur 15 en position sortie, et à être placés en regard d'évidements complémentaires 20 formés dans une région inférieure de la barre 7 et débouchant sur ce même bord inférieur 16, lorsque le panneau 5 est correctement et complètement engagé par son rail 17 dans la barre de porte 7.

Les pions 19 peuvent être escamotés simultanément par l'action d'un utilisateur sur une tirette 119 liée mécaniquement auxdits pions 19.

A la figure 4, on a représenté le même véhicule en configuration découverte, dans laquelle le toit 2 a été escamoté dans la partie arrière 3 du véhicule 1, et le panneau 5 de porte a été désolidarisé de la barre 7.

Pour passer de la configuration couverte représentée à la figure 1 à la configuration découverte, l'utilisateur doit préalablement démonter la charnière 11 visible sur la figure 5 ; il doit ensuite actionner la tirette 119 de façon à escamoter les pions 19 et à les libérer des évidements 20, et à faire coulisser, la porte étant ouverte, le rail 17 du panneau 5 dans la glissière 18 de la barre 7. Cette opération bien entendu est réversible pour passer de la configuration représentée en figure 2 à la configuration couverte représentée en figure 1.

Lorsque le véhicule 1 se trouve dans la configuration découverte, on voit que la carrosserie du véhicule 1 est extrêmement dépouillée, mais conserve un niveau de sécurité élevé du fait de la présence d'un élément rigide de protection constitué par la barre 7 sur le côté du véhicule.

Pour des considérations esthétiques et de plaisir d'utilisation, on préfère que la barre 7 puisse s'ouvrir, pour dégager le passage vers la sortie du conducteur ou du passager, en pivotant autour d'un axe de rotation horizontal, alors que la porte dans sa configuration couverte, pivote autour d'un axe vertical.

Pour cela, et comme cela a été représenté à la figure 5, le dispositif d'articulation 10 comporte une partie de charnière fixe 21 solidaire de la partie de caisse 13 du véhicule et une partie de charnière mobile 22 solidaire de la barre de porte 7 et placée dans un logement 23 de celle-ci.

La partie de charnière mobile 22 est susceptible de pivoter par rapport à la partie de charnière fixe 21 soit autour d'un axe vertical Z-Z , soit autour d'un axe horizontal Y-Y.

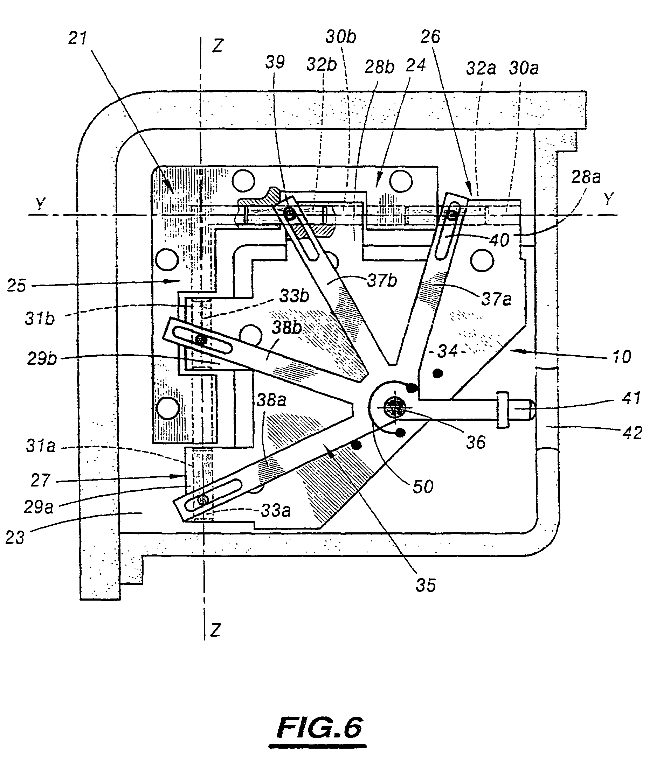

Comme cela apparaît mieux à la figure 6, la partie de charnière fixe 21 comporte une première glissière fixe 24 d'axe horizontal et transversal Y-Y et une deuxième glissière fixe 25 d'axe vertical Z-Z, tandis que la partie de charnière mobile 22 comporte une première glissière mobile 26 susceptible de s'emboîter dans la première glissière fixe 24 de façon à présenter le même axe Y-Y, et une deuxième glissière mobile 27 susceptible de s'emboîter de façon analogue dans la deuxième glissière fixe 25 de façon à présenter le même axe Z-Z.

Les première et deuxième glissières mobiles 26,27 sont constituées chacune de deux blocs 28a, 28b, 29a,29b, dans lesquels sont formés des canaux 30a,30b,31a,31b recevant chacun à coulissement un tourillon 32a,32b, 33a,33b, de longueur sensiblement identique à celle du canal respectif.

La partie de charnière mobile 22 est supportée par une platine 34 sur la surface de laquelle est monté un organe rotatif de sélection 35 autour d'un axe de rotation 36 sensiblement orthogonal à la surface de la platine 34. L'organe de sélection 35 présente quatre doigts 37a,37b,38a,38b s'étendant radialement à partir de l'axe de rotation 36 jusqu'à leurs canaux respectifs 30a, 30b, 31a, 31b, les doigts 37a,37b,38a,38b étant décalés angulairement par rapport à l'axe 36.

Chaque tourillon 32a,32b,33a,33b comporte un pion 39 reçu dans une lumière 40 radiale par rapport à l'axe 36 de forme allongée, formée à l'extrémité libre de chaque doigt 37a,37b,38a,38b respectif, de manière à pouvoir coulisser dans ladite lumière 40.

L'organe de sélection 35 comporte en outre un doigt de manoeuvre 41 radial par rapport à l'axe de rotation 36, et dont l'extrémité libre se situe au voisinage d'une ouverture 42 pratiquée dans le logement 23, de façon que ledit doigt de manoeuvre 41 soit accessible à un utilisateur placé à l'intérieur du véhicule et que l'utilisateur puisse manoeuvrer à rotation l'organe de sélection 35.

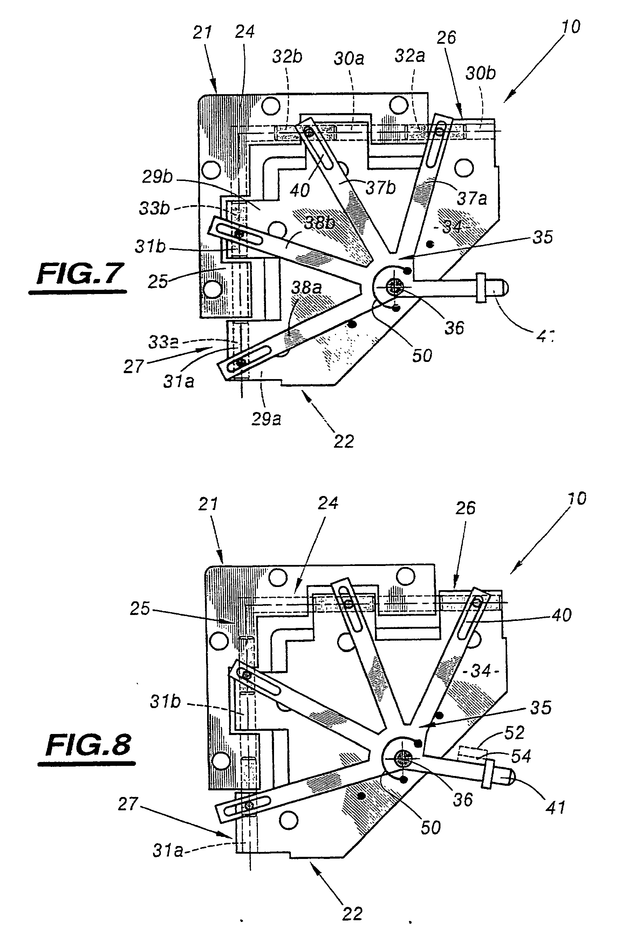

L'organe de sélection 35 est susceptible de prendre deux positions angulaires par rapport à la platine 34, qui ont été représentées aux figures 7 et 8.

En se référant à la figure 7, on voit que les tourillons 32a,32b d'axe Y-Y sont engagés à la fois dans la première glissière mobile 26 et la première glissière fixe 24, matérialisant de ce fait un axe de rotation suivant l'axe Y-Y entre la partie de charnière fixe 21 et la partie de charnière mobile 22, alors que les tourillons 33a, 33b d'axe Z-Z sont dégagés de la deuxième glissière fixe 25 et presque en totalité contenus dans les canaux 31a,31b respectifs des blocs 29a,29b de la deuxième glissière mobile 27.

Il en résulte que la barre de porte 7 est susceptible de pivoter par rapport à la partie de caisse 13 autour du deuxième axe Y-Y, comme cela est visible sur la figure 4.

Une telle rotation de la barre 7 dans un plan vertical est assistée par un compensateur d'effort 43 constitué d'un vérin dont l'extrémité libre du cylindre 44 est fixée à la barre 7 et l'extrémité libre de la tige mobile 45 est fixée à la partie de caisse 13, comme cela est représenté sur la figure 5. L'effet du poids de la barre 7 est au moins partiellement compensé par ce moyen, ce qui permet à un utilisateur de soulever la barre 7 en fournissant peu d'efforts.

Partant de la position du dispositif d'articulation 10 représentée à la figure 7, la barre de porte étant bien entendu en position fermée, l'utilisateur peut manoeuvrer le doigt de manoeuvre 41 dans le sens de rotation horaire pour parvenir à la deuxième position de l'organe de sélection 35 représenté à la figure 8.

La liaison mécanique entre la deuxième glissière mobile 27 et la deuxième glissière fixe 25, est analogue à ce qui vient d'être décrit en référence à la figure 7, si l'on intervertit le rôle des tourillons 32a,32b d'axe Y-Y et celui des tourillons 33a,33b d'axe Z-Z, vis-à-vis d'une part, de la deuxième glissière mobile 27 de la deuxième glissière fixe 25 et d'autre part, de la première glissière mobile 26 et de la première glissière fixe 24.

On voit qu'une rotation du doigt de manoeuvre 41 autour de l'axe 36 provoque un coulissement simultané d'une part des tourillons 32a,32b d'axe Y-Y et d'autre part, des tourillons 33a,33b d'axe Z-Z, suivant des axes orthogonaux.

Une simple rotation de l'organe de sélection 35 permet donc de faire varier l'axe de pivotement de la porte 4 par rapport à la partie de caisse 13, entre un premier et un deuxième axe Z-Z, Y-Y sensiblement orthogonaux.

Comme on le voit sur la figure 5, le verrouillage/déverrouillage de la porte 4 est effectué par des moyens classiques de verrouillage/déverrouillage, comprenant un verrou de porte 46 actionnable par l'intermédiaire d'une poignée intérieure 47 ou d'une poignée extérieure 48, ces moyens de verrouillage/déverrouillage étant supportés par la barre de porte 7.

On peut prévoir par ailleurs, si l'on souhaite que la présence ou respectivement l'absence du panneau de porte 5 impose que l'axe de rotation soit respectivement l'axe vertical Z-Z ou l'axe horizontal Y-Y, la disposition suivante :
- le panneau de porte 5 comporte un organe de blocage faisant saillie à l'intérieur de la barre de porte 7 lorsque le panneau 5 est fixé à la barre 7, et qui maintient l'organe de sélection 35 dans sa position dans laquelle la porte 4 est susceptible de rotation autour du premier axe Z-Z, l'organe de sélection 35 étant ramené dans sa position dans laquelle la porte est susceptible de rotation autour du deuxième axe Y-Y, lorsque le panneau de porte 5 est désolidarisé de la barre 7, par l'action d'un organe de rappel élastique 50 de l'organe de sélection 35.

Comme représenté à la figure 8 en traits pointillés, l'organe de blocage est par exemple une barrette 52 pourvue d'une rampe 54, adaptée pour coopérer avec le doigt de manoeuvre 41 et solidaire du panneau de porte 5.

L'utilisateur n'a plus alors la possibilité de sélectionner, par l'intermédiaire de l'organe de sélection 35, l'axe de rotation.

L'invention permet de réaliser un véhicule présentant des configurations différentes adaptées à divers modes d'utilisation, avec un niveau de sécurité élevé, grâce à des moyens mécaniques relativement simples.

La simplicité de ces moyens assure également une grande facilité d'utilisation en particulier pour passer d'une configuration à l'autre.

## Revendications

1. Porte transformable d'un véhicule automobile qui peut être utilisé comme véhicule de loisirs à carrosserie ouverte, comprenant une partie inférieure présentant la forme d'un panneau (5), **caractérisée en ce qu'**elle comporte une barre (7) s'étendant dans une direction sensiblement longitudinale articulée sur une partie de caisse (13) du véhicule (1) par l'intermédiaire d'un dispositif d'articulation (10), la partie inférieure (5) de la porte (4) pouvant être fixée de façon amovible à la barre (7) par l'intermédiaire de moyens de fixation libérables (14).

2. Porte transformable de véhicule automobile suivant la revendication 1, **caractérisée en ce que** le dispositif d'articulation (10) comporte une partie de charnière fixe (21) solidaire de la partie de caisse (13) du véhicule (1) et une partie de charnière mobile (22) solidaire de la barre de porte (7), susceptible de pivoter par rapport à la partie de charnière fixe (21) autour d'un axe qui peut être sélectionné, par l'intermédiaire d'un organe de sélection (35), entre un premier (Z-Z) et un deuxième (Y-Y) axes sensiblement orthogonaux.

3. Porte transformable de véhicule automobile suivant la revendication 2, **caractérisée en ce que** le premier axe (Z-Z) est sensiblement vertical et le deuxième axe (Y-Y) est sensiblement horizontal et de direction transversale par rapport à l'axe longitudinal du véhicule (1).

4. Porte transformable de véhicule automobile suivant la revendication 3, **caractérisée en ce que** la barre (7) est reliée à la partie de caisse (13) par des moyens de compensation d'effort (43) adaptés pour favoriser le pivotement de la barre (7) autour du deuxième axe (Y-Y) à l'encontre de son poids .

5. Porte transformable de véhicule automobile suivant l'une quelconque des revendications 2 à 4, **caractérisée en ce que** :
- les parties de charnière fixe (21) et mobile (22) présentent chacune une première glissière (24,26) et une deuxième glissière (25,27) d'axes sensiblement orthogonaux, les premières (24,26) et respectivement les deuxièmes (25,27) glissières étant susceptibles de s'emboîter de façon à présenter un axe commun, et
- la partie de charnière mobile (22) comporte au moins un premier tourillon (32a,32b) monté coulissant dans la première glissière (26) de la partie de charnière mobile (22) et au moins un deuxième tourillon (33a,33b) monté coulissant dans la deuxième glissière (27) de la partie de charnière mobile (22), lesdits tourillons (32a,32b,33a,33b) étant déplaçables par l'organe de sélection (35) entre une première position dans laquelle le premier tourillon (32a,32b) est engagé à la fois dans la première glissière (26) de la partie de charnière mobile (22) et la première glissière (24) de la partie de charnière fixe (21), alors que le deuxième tourillon (33a,33b) est dégagé de la deuxième glissière (25) de la partie de charnière fixe (21), et une deuxième position dans laquelle le deuxième tourillon (33a,33b) est engagé à la fois dans la deuxième glissière (27) de la partie de charnière mobile (22) et la deuxième glissière (25) de la partie de charnière fixe (21), alors que le premier tourillon (32a ,32b) est dégagé de la première glissière (24) de la partie de charnière fixe (21), de façon que la barre de porte (7) soit susceptible de pivoter par rapport à la partie de caisse (13), respectivement autour du premier (Z-Z) ou du deuxième axe (Y-Y).

6. Porte suivant la revendication 5, **caractérisée en ce que** l'organe de sélection (35) est un organe monté rotatif autour d'un axe de rotation, sur une platine (34) solidaire de la partie de charnière mobile (22), et lié aux premier (32a,32b) et deuxième (33a,33b) tourillons de façon qu'une rotation dudit organe de sélection (35) engendre un double coulissement d'une part, du premier tourillon (32a,32b) par rapport aux premières glissières (24,26), et d'autre part, du deuxième tourillon (33a,33b) par rapport aux deuxièmes glissières (25,27).

7. Porte suivant la revendication 6, **caractérisée en ce que** l'organe de sélection (35) est susceptible de prendre deux positions angulaires par rapport à la platine (34) correspondant respectivement aux deux positions relatives des tourillons (32a,32b, 33a,33b) et des glissières (24,25,26,27).

8. Porte suivant la revendication 7, **caractérisée en ce que** le panneau de porte (5) comporte un organe de blocage en saillie (52) adapté pour coopérer avec l'organe de sélection (35), lorsque le panneau (5) est fixé à la barre (7), et le maintenir dans sa position dans laquelle la porte (4) est susceptible de pivoter autour du premier axe (Z-Z).

9. Porte suivant la revendication 8, **caractérisée en ce que** l'organe de sélection (35) comporte un organe de rappel élastique (50) qui tend à rappeler ledit organe de sélection (35) vers sa position dans laquelle la porte (4) est susceptible de pivoter autour du deuxième axe (Y-Y) lorsque le panneau (5) est désolidarisé de la barre (7).

10. Porte suivant l'une quelconque des revendications 6 à 9, **caractérisée en ce que** les premier (32a,32b) et deuxième (33a,33b) tourillons comportent chacun au moins un pion (39), et l'organe de sélection (35) présente au moins deux doigts radiaux (37a,37b,38a,38b) décalés angulairement par rapport à l'axe de rotation, comportant chacun au moins une lumière radiale (40) recevant chacune à coulissement l'un desdits pions (39).

11. Porte suivant l'une quelconque des revendications 6 à 10, **caractérisée en ce que** l'organe de sélection (35) présente un doigt de manoeuvre (41) sensiblement radial par rapport à l'axe de rotation, accessible à un utilisateur placé à l'intérieur du véhicule afin qu'il puisse manoeuvrer à rotation l'organe de sélection (35).

12. Véhicule automobile comportant une porte suivant l'une quelconque des revendications 1 à 11.

## Claims

1. Convertible door for a motor vehicle which can be used as a recreational vehicle with an open body, said door comprising a lower part having the form of a panel (5), **characterised in that** said door has a bar (7) extending in a substantially longitudinal direction and articulated on a bodywork part (13) of the vehicle (1) via an articulating device (10), the lower part (5) of the door (4) being capable of being detachably fixed to the bar (7) via releasable fixing means (14).

2. Convertible motor-vehicle door according to Claim 1, **characterised in that** the articulating device (10) has a fixed hinge part (21) integral with the bodywork part (13) of the vehicle (1) and a movable hinge part (22) integral with the door bar (7) and capable of pivoting in relation to said fixed hinge part (21) about an axis which can be selected, via a selecting component (35), between a first axis (Z-Z) and a second axis (Y-Y), which axes are substantially orthogonal.

3. Convertible motor-vehicle door according to Claim 2, **characterised in that** the first axis (Z-Z) is substantially vertical and the second axis (Y-Y) is substantially horizontal and transverse in direction in relation to the longitudinal axis of the vehicle (1).

4. Convertible motor-vehicle door according to Claim 3, **characterised in that** the bar (7) is connected to the bodywork part (13) by force-compensating means (43) which are adapted to favour pivoting of the bar (7) about the second axis (Y-Y) against its weight.

5. Convertible motor-vehicle door according to any of Claims 2 to 4, **characterised in that**:
- the fixed (21) and movable (22) hinge parts each have a first slide (24, 26) and a second slide (25, 27) having substantially orthogonal axes, the first (24, 26) and second (25, 27) slides respectively being capable of fitting together so as to have a common axis, and
- the movable hinge part (22) has at least one first gudgeon (32a, 32b) mounted in a sliding manner in the first slide (26) of the movable hinge part (22) and at least one second gudgeon (33a, 33b) mounted in a sliding manner in the second slide (27) of the movable hinge part (22), the said gudgeons (32a, 32b, 33a, 33b) being displaceable by the selecting component (35) between a first position in which the first gudgeon (32a, 32b) is engaged in both the first slide (26) of the movable hinge part (22) and the first slide (24) of the fixed hinge part (21), whereas the second gudgeon (33a, 33b) is disengaged from the second slide (25) of the fixed hinge part (21), and a second position in which the second gudgeon (33a, 33b) is engaged in both the second slide (27) of the movable hinge part (22) and the second slide (25) of the fixed hinge part (21), whereas the first gudgeon (32a, 32b) is disengaged from the first slide (24) of the fixed hinge part (21), so that the door bar (7) is capable of pivoting in relation to the bodywork part (13) about the first (Z-Z) or second (Y-Y) axis respectively.

6. Door according to Claim 5, **characterised in that** the selecting component (35) is a component which is mounted, so as to be rotatable about an axis of rotation, on a plate (34) integral with the movable hinge part (22), and is linked to the first (32a, 32b) and second (33a, 33b) gudgeons in such a way that rotation of the said selecting component (35) produces a double sliding motion, on the one hand, of the first gudgeon (32a, 32b) in relation to the first slides (24, 26) and, on the other hand, of the second gudgeon (33a, 33b) in relation to the second slides (25, 27).

7. Door according to Claim 6, **characterised in that** the selecting component (35) is capable of assuming two angular positions in relation to the plate (34) which correspond, respectively, to the two relative positions of the gudgeons (32a, 32b, 33a, 33b) and of the slides (24, 25, 26, 27).

8. Door according to Claim 7, **characterised in that** the door panel (5) has a projecting locking component (52) which is adapted to cooperate with the selecting component (35), when the panel (5) is fixed to the bar (7), and to keep it in its position in which the door (4) is capable of pivoting about the first axis (Z-Z).

9. Door according to Claim 8, **characterised in that** the selecting component (35) has an elastic returning means (50) which tends to return the said selecting component (35) to its position in which the door (4) is capable of pivoting about the second axis (Y-Y) when the panel (5) is separated from the bar (7).

10. Door according to any of Claims 6 to 9, **characterised in that** the first (32a, 32b) and second (33a, 33b) gudgeons each have at least one pin (39), and the selecting component (35) has at least two radial fingers (37a, 37b, 38a, 38b) which are offset angularly in relation to the axis of rotation and each have at least one radial aperture (40) each receiving one of the said pins (39) with sliding motion.

11. Door according to any of Claims 6 to 10, **characterised in that** the selecting component (35) has a manoeuvring finger (41) which is substantially radial in relation to the axis of rotation and is accessible to a user located inside the vehicle so that said user is able to manoeuvre the selecting component (35) in rotation.

12. Motor vehicle having a door according to any of Claims 1 to 11.

## Patentansprüche

1. Wandelbare Tür eines Kraftfahrzeuges, das wie ein Freizeitzeitfahrzeug mit offener Karosserie benutzt werden kann, mit einem unteren Teil, der die Form einer Platte (5) hat, **dadurch gekennzeichnet, dass** sie eine Strebe (7) umfasst, die in eine im Wesentlichen longitudinale Richtung verläuft und an einen Teil des Kastens (13) des Fahrzeugs
(1) über eine Gelenkeinrichtung (10) angelenkt ist, wobei der untere Teil (5) der Tür (4) über lösbare Befestigungseinrichtungen (14) abnehmbar an der Strebe (7) befestigt werden kann.

2. Wandelbare Tür eines Kraftfahrzeuges nach Anspruch 1, **dadurch gekennzeichnet, dass** die Gelenkeinrichtung (10) einen festen Scharnierteil (21), der fest mit dem Teil des Kastens (13) des Fahrzeuges (1) verbunden ist, und einen beweglichen Scharnierteil (22) umfasst, der fest mit der Strebe (7) der Tür verbunden ist und bezüglich des festen Scharnierteils (21) um eine Achse schwenken kann, die über ein Wählelement (35) zwischen einer ersten Achse (Z-Z) und einer zweiten Achse (Y-Y) wählbar ist, die im Wesentlichen orthogonal zueinander verlaufen.

3. Wandelbare Tür eines Kraftfahrzeuges nach Anspruch 2, **dadurch gekennzeichnet, dass** die erste Achse (Z-Z) im Wesentlichen vertikal verläuft und dass die zweite Achse (Y-Y) im Wesentlichen horizontal und in Querrichtung bezüglich der Längsachse des Fahrzeuges (1) verläuft.

4. Wandelbare Tür eines Kraftfahrzeuges nach Anspruch 3, **dadurch gekennzeichnet, dass** die Strebe (7) mit dem Teil des Kastens (3) über Kraftkompensationseinrichtungen (43) verbunden ist, die das Schwenken der Strebe (7) um die zweite Achse (Y-Y) gegen ihr Gewicht unterstützen.

5. Wandelbare Tür eines Kraftfahrzeuges nach einem der Ansprüche 2 bis 4, **dadurch gekennzeichnet dass**
- der feste und der bewegliche Scharnierteil (21, 22) jeweils eine erste Gleitfläche (24, 26) und eine zweite Gleitfläche (25, 27) aufweisen, deren Achsen im Wesentlichen orthogonal zueinander sind, wobei die ersten und jeweils die zweiten Gleitflächen (24, 26; 25, 27) sich so zusammen passen können, dass sich eine gemeinsame Achse ergibt, und
- der bewegliche Scharnierteil (22) wenigstens einen ersten Drehzapfen (32a, 32b), der gleitend verschiebbar in der ersten Gleitfläche (26) des beweglichen Scharnierteils (22) angebracht ist, und wenigstens einen zweiten Drehzapfen (33a, 33b) umfasst, der gleitend verschiebbar in der zweiten Gleitfläche (27) des beweglichen Scharnierteils (22) angebracht ist, wobei die Drehzapfen (32a, 32b, 33a, 33b) über das Wählelement (35) zwischen einer ersten Position, in der der erste Drehzapfen (32a, 32b) sowohl mit der ersten Gleitfläche (26) des beweglichen Scharnierteils (22) als auch mit der ersten Gleitfläche (24) des festen Scharnierteils (21) in Eingriff steht, während der zweite Drehzapfen (33a, 33b) von der zweiten Gleitfläche (25) des festen Scharnierteils (21) gelöst ist, und einer zweiten Position versetzbar ist, in der der zweite Drehzapfen (33a, 33b) sowohl von der zweiten Gleitfläche (27) des beweglichen Scharnierteils (22) als auch von der zweiten Gleitfläche (25) des festen Scharnierteils (21) erfasst wird, während der erste Drehzapfen (32a, 32b) von der ersten Gleitfläche (24) des festen Scharnierteils (21) gelöst ist, derart, dass die Strebe (7) der Tür bezüglich des Teils des Kastens (13) jeweils um die erste Achse (Z-Z) oder die zweite Achse (Y-Y) geschwenkt werden kann.

6. Tür nach Anspruch 5, **dadurch gekennzeichnet, dass** das Wählelement (25) ein Bauteil ist, das drehbar um eine Drehachse an einer Platte (34) angebracht ist, die fest an dem beweglichen Scharnierteil (22) angebracht und mit dem ersten Drehzapfen (32a, 32b) und dem zweiten Drehzapfen (33a, 33b) derart verbunden ist, dass eine Drehung des Wählelementes (35) zu einer Doppelverschiebung einerseits des ersten Drehzapfens (32a, 32b) bezüglich der ersten Gleitflächen (24, 26) und andererseits des zweiten Gleitzapfens (33a, 33b) bezüglich der zweiten Gleitflächen (25, 27) führt.

7. Tür nach Anspruch 6, **dadurch gekennzeichnet, dass** das Wählelement (35) zwei Winkelpositionen bezüglich der Platte (34) einnehmen kann, die jeweils den beiden relativen Positionen der Drehzapfen (32a, 32b, 33a, 33b) und der Gleitflächen (24, 25, 26, 27) entsprechen.

8. Tür nach Anspruch 7, **dadurch gekennzeichnet, dass** die Platte (5) der Tür ein vorstehendes Sperrelement (52) umfasst, das mit dem Wählelement (35) zusammenarbeiten kann, wenn die Platte (5) an Strebe (7) befestigt ist und diese in ihrer Position hält, in der die Tür (4) um die erste Achse (Z-Z) geschwenkt werden kann.

9. Tür nach Anspruch 8, **dadurch gekennzeichnet, dass** das Wählelement (35) ein elastische Rückstellelement (50) umfasst, das dazu neigt, das Wählelement (35) in die Position zurückzustellen, in der die Tür (4) um die zweite Achse (Y-Y) geschwenkt werden kann, während die Platte (5) von der Strebe (7) gelöst ist.

10. Tür nach einem der Ansprüche 6 bis 9, **dadurch gekennzeichnet, dass** der erste Drehzapfen (32a, 32b) und der zweite Drehzapfen (33a, 33b) jeweils wenigstens ein Ansatzstück (39) umfassen und das Wählelement (35) wenigstens zwei radiale Finger (37a, 37b, 38a, 38b) aufweist, die bezüglich der Drehachse winkelversetzt sind und jeweils wenigstens einen radialen Schlitz (40) aufweisen, der jeweils gleitend verschiebbar eines der besagten Ansatzstücke (39) aufnimmt.

11. Tür nach einem der Ansprüche 6 bis 10, **dadurch gekennzeichnet, dass** das Wählelement (35) einen Bedienungsfinger (41) umfasst, der im Wesentlichen radial bezüglich der Drehachse verläuft und für einen Benutzer, der im Inneren des Fahrzeuges sitzt, zugänglich ist, damit dieser das Wählelement (35) drehen kann.

12. Kraftfahrzeug mit einer Tür nach einem der Ansprüche 1 bis 11.
